# EUROPÄISCHE PATENTSCHRIFT

(11) **EP 0 904 684 B1**
(45) Veröffentlichungstag und Bekanntmachung des Hinweises auf die Patenterteilung: **09.04.2003**
(21) Anmeldenummer: 98112921.6
(22) Anmeldetag: 11.07.1998
(51) Int. Cl.: A01D 75/18

(54) **Fremdkörperrückführvorrichtung an Erntemaschinen oder dergleichen**
Reversing device of foreign objects in harvesting machines
Dispositif inverseur de corps étrangers pour récolteuses

(30) Priorität: 24.09.1997 DE 19742060
(43) Veröffentlichungstag der Anmeldung: 31.03.1999
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- EP-A- 0 064 566
- EP-A- 0 217 418
- DE-A- 4 129 113
- DE-A- 4 301 611
- FR-A- 2 536 244
- GB-A- 2 035 029
- GB-A- 2 299 010

## Beschreibung

Die Erfindung betrifft eine Fördervorrichtung, insbesondere an einer Erntemaschine, mit Förderwalzen in deren unterer Förderwalze eine Metallfremdkörpererkennungsvorrichtung angeordnet ist, die einer Häckselwalze vorgeordnet ist und jeweils bei einem in einem Fremdkörpererkennungsbereich erkannten Fremdkörper eine Schnellstillsetzung der Förderwalzen steuert, bevor dieser das Häckselwerk erreicht.

Eine derartige Vorrichtung ist aus der DE 41 29 113 A 1 bekannt. Jeweils, wenn die Förderwalzen aufgrund einer Fremdkörpererkennung stillgesetzt sind, ist es erforderlich, den Fremdkörper aus dem Förderbereich zu beseitigen, damit das Häckselwerk damit nicht belastet wird. In einigen Fällen verläßt der Fremdkörper die Förderstrecke ohne weiteres Zutun durch einen Spalt zwischen zwei hintereinander angeordneten Förderwalzen. Oft muß jedoch die Förderrichtung umgekehrt werden, damit der Fremdkörper vor den ersten Förderwalzen entnommen werden kann oder herausfällt. Bei dem Rückfördern wird in einigen Fällen der Fremdkörper von der oberen, gerippten Förderwalze, die i.a. eine Anpreßwalze ist, erfaßt und mitgenommen, so dass er bei zu weiter Drehung nach vorn in den Forderweg, also direkt vor den Häcksler fällt und bei erneutem Vorwärtslauf in das Häckselwerk gerät. Auch ist der Fremdkörper häufig nur nach langem Suchen zu finden, da der Erkennungsbereich der Erkennungsvorrichtung räumlich ausgedehnt ist und die Stillsetzung mit der Schnellstopvorrichtung einen unterschiedlichen Förderweg beläßt, je nach der Fördergeschwindigkeit zum Schaltzeitpunkt.
Die Empfindlichkeit und die Filtereigenschaften der Metallfremdkörpererkennungsvorrichtung werden abhängig von Fördergeschwindigkeitssignalen und von der Spaltweite zwischen der Anpreß- und der Förderantriebswalze beeinflußt, so dass Fremdkörper ab einer kritischen Größe erkannt werden.

Weiterhin ist aus der DE 43 01 611 A 1 bekannt, mehrere Magnetpolbereiche und Detektorspulen in der Förderrichtung und quer zur Förderrichtung anzuordnen, womit verschiedene Nutzsignale in unterschiedlichen Bereichen des Förderweges aufgenommen werden und damit auch eine weitgehende Kompensation von Störsignalen, die durch magnetfeldwirksame Strukturen, insbesondere Querrippen, an den Förderwalzen entstehen, vorgenommen wird.

Es ist Aufgabe der Erfindung, das Auffinden und Beseitigen von detektierten Fremdkörpern zu verbessern.

Die Lösung besteht darin, dass nach der Schnellstillsetzung eine Rückwärtsförderung solange gesteuert erfolgt, bis der Fremdkörper den Fremdkörpererkennungsbereich wieder durchlaufen bzw. verlassen hat.

Vorteilhafte Ausgestaltungen sind in den Unteransprüchen und den Nebenansprüchen angegeben. Die Erfindung macht von den vorhandenen Meß- und Ortungsmitteln Gebrauch, um die Rückwärtsförderung so zu steuern, dass das zu entfernende Objekt in einem eng begrenzten Bereich vor den Förderwalzen im leichten Zugriff liegt. Vorteilhaft wird die Rückwärtsförderung höchstens solange betrieben, bis eine obere Förderwalze den Fremdkörper höchstens bis zum höchsten Umfangspunkt derselben mitgeführt hat.

Somit ist der Sicherheitsaspekt durch eine Begrenzung des Rückdrehbereichs beachtet, indem die Umdrehungsmessung der oberen Förderwalze zur Sicherheitsabschaltung genutzt wird. Dadurch wird verhindert, dass u.U. ein im Zuführbereich von der oberen Förderwalze ergriffener metallischer Fremdkörper über diese Walze vor das Häckselwerk gefördert wird und dort beim erneuten Vorschub Schaden anrichten kann. Vorteilhaft ist es vorgesehen, dass dem Bediener nach dem Reversieren des Fördervorganges von der Steuervorrichtung eine Anzeige geboten wird, ob beim Rückfördern der Fremdkörper wieder erkannt wurde, da dann, wenn dies nicht der Fall ist, der Fremdkörper gewöhnlich die Förderstrecke durch einen Spalt im Förderkanal verlassen hat und eine Suche nicht erforderlich ist.
Bei den metallischen Fremdkörpern, vor denen das Häckselwerk geschätzt werden soll und die nicht ins Futter gelangen dürfen, handelt es sich um sehr unterschiedliche Gegenstände, wie Bolzen, Stangen, Kettenstränge, Drähte und Büchsen oder Blechteile, die längs, quer oder in beliebiger Ausrichtung und Höhenlage zur Förderstrecke liegen können und deshalb eine längere oder kürzere Strecke und Zeit im Detektorbereich verweilen sowie unterschiedlich ausgeprägte Detektorsignale hervorrufen. Da auch der Bremsweg der Schnellstillsetzbremse abhängig von deren Einstellung und Zustand sowie von der jeweiligen Fördergeschwindigkeit und Menge verschieden lang ist, kann es vorkommen, dass das erkannte metallische Fremdobjekt den Detektorbereich noch nicht oder bereits verlassen hat, wenn die Bremsung beendet ist. Zur Verfolgung des Fremdkörpers ist es deshalb vorteilhaft, wenn in der Steuervorrichturig ab dem Zeitpunkt der ersten Erkennung desselben bis zur Stillsetzung eine Wegmessung. Mit den Winkelgebersignalen einer Förderwalze, die i.e. zur Detektorsteuerung genutzt werden, erfolgt. Weiterhin wird ergänzend die Langenerstreckung des Objektes mittels der Gebersignale gemessen, die während des Detektorsignals auftreten.

Mit diesen Informationen über die Erstreckung des Objektes in der Förderrichtung läßt sich die Lage und Rückführung ergänzend überwachen, da man im Rahmen der Toleranzen, die durch eine zwischenzeitliche Lageänderung im Futterstrom und die Unterschiede der Ansprechschwellen des Detektors bei der abnehmenden bzw. zunehmenden Geschwindigkeit der Fördervorrichtung, davon ausgehen kann, dass eine Erstreckungs- und Lagemessung bei der Rückführung ähnliche Ergebnisse zeigt. Deshalb werden auch bei dem Rücktransport die Winkelgebersignale der Förderwalze ausgewertet und ein Toleranzvergleich mit den vorher gemessenen und gespeicherten zulässigen Werten vorgenommen. Bei wesentlichen Abweichungen von den zu erwartenden Meßergebnissen werde diese dem Bediener gemeldet, ebenso wie die Objekterstreckung als wichtige Hilfe zum auffinden und Identifizieren des Störobjektes dem Bediener signalisiert wird. Auch wenn beim Reversieren das Objekt nicht mehr detektiert wurde, wird diese Tatsache dem Bediener gemeldet.

Zusätzlich oder alternativ zur Lageinformation, die aus den Winkelgebersignalen gewonnen wird, sind auch Lageinformationen in dem Detektorsignal oder den Detektorsignalen insbesondere, falls mehrere Induktions-Detektorspulen an den Magneten angeordnet sind, enthalten. Die Signale bestehen nämlich jeweils aus einer positiven und einer negativen Teilwelle, die beim Eintritt bzw. Austritt des Objektes in bzw. aus dem Magnetfeld, also in verschiedenen Bereichen des Förderkanals entstehen. Falls die Magnetanordnung ein T-förmiges Joch umfaßt, dessen Jochschenkel sich in der Förderrichtung erstrecken, ergibt sich in zwei verschiedenen Bereichen der Förderstrecke, den Jochen zugeordnet, je ein Signalanstieg und Signalabfall, und falls getrennte Spulen auf den Schenkeln angeordnet sind, so treten die Signale dort separiert auf und sind räumlich zuzuordnen. Der Eintritt und der Austritt des Objektes ist somit Zonenweise zu erfassen, indem die Signale und ihre Steigungsrichtung ausgewertet werden. Die zeitliche Relation der Signale und deren Differentiale zeigt die Längenerstreckung des Objektes an, wobei zu beachten ist, dass u.U. die Geschwindigkeit des Fördergutes durch das Bremsen oder Anfahren nicht konstant ist. Eine Korrelation der verschiedenen Signalkomponenten zu den Winkelgebersignalen herzustellen ist deshalb hilfreich, eine noch größere Genauigkeit zu erreichen.

Somit sind zwei verschiedene Wege gegeben, das Objekt nach Lage und Größe beim Einlauf und beim Rücktransport zu erfassen, so dass dadurch eine große Sicherheit besteht, dass demgemäß der Rücklauf möglichst genau dann beendet wird, wenn das Objekt am Eingang der Förderwalzen liegt und diese ganz verlassen hat. Außerdem werden die Winkelgeberimpulse noch dazu genutzt, die Grenze für den Rücktransport festzulegen, so dass der Fremdkörper, wenn er von der Oberwalze ergriffen wurde, nicht über diese gefördert wird.

Eine weitere Verbesserung der Vorrichtung erbringt eine getrennte Auswertung der Sensorsignale, wenn diese in mehreren Sensorsegmenten über die Breite des Förderers aufgeteilt ist, was zur Störungsminderung gebräuchlich ist. Hierbei werden in einer neuen Schaltungsart vorteilhaft die Signale der einzelnen Spulen, die von den störenden rotierenden und/oder vibrierenden Maschinenteilen im wesentlichen synchron erzeugt werden, gemittelt und jeweils von den einzelnen Spulensignalen abgezogen, so dass jeweils nur die abschnittsweisen Fremdkörper-Störungen als Differenzsignale hervorgehoben sind und somit die Lage des Fremdkörpers angeben. Diese einzelnen Differenzsignale werden aufbereitet und zusätzlich mit einem Schwellwert verglichen und nach ihrem Auftreten dem Bediener angezeigt, so dass dieser auf einem noch weiter eingeengten Raum nach dem Störobjekt suchen kann.

Die notwendigen Signalverknüpfungen und Aufbereitungen lassen sich sowohl schaltungstechnisch als auch nach einer Digitalisierung der Signale softwaremäßig vornehmen. Die bekannte umgekehrt geschwindigkeitsabhängige Signalverstärkung oder geschwindigkeitsabhängige Signaldämpfung vor einer Digitalisierung wird zur Erreichung eines guten Störabstandes bevorzugt angewandt.

Eine Weiterentwicklung der Vorrichtung besteht darin, dass die Magnet-Sensoranordnung, die gewöhnlich in der Förderwalze untergebracht ist, um eine Achse parallel zur Walzenachse oder um diese selbst verschwenkbar gelagert ist und mit einem Schwenkantrieb verbunden ist.
Dadurch läßt sich der Ortungsbereich in Richtung auf den Häcksler verlegen, und Objekte, die sich evtl. zwischen der Förderwalze und einer Nachfolgewalze befinden, können dadurch detektiert werden und zwar jeweils bei der Verschwenkung selbst oder bei der anschließenden Reversierbewegung der Fördervorrichtung. Voraussetzung für die Gewinnung eines brauchbaren Signals bei der Verschwenkung ist allerdings, dass diese ausreichend schnell vorgenommen wird. Mittels einer Rückschwenkung der Detektorvorrichtung zum Einlauf hin wird der Rücktransport des Objektes und dessen Endposition exakt verifiziert und entsprechend dem Bediener angezeigt. Die Schwenkbewegung läßt sich auch dynamisch um einen voreingestellten Einstellwinkel vornehmen, so dass kontinuierlich ein Detektorsignal erzeugt wird, wenn Metallteile im schwankenden Feldbereich vorhanden sind.

Auch lässt sich durch eine Verschwenkung der Detektorvorrichtung in eine zu den störenden, rotierenden Bauteilen der Fördervorrichtung symmetrische Lage eine Minimierung des Störpegels erreichen, da die Signale beim Ein- und Austauchen der Förderrippen gegenpolig sind und diese durch die umfangmäßig gleich verteilte Rippenbesetzung periodisch sind.
Statt der hier betrachteten bekannten magnetischelektrodynamischen Sensoren lassen sich ebenso Detektoren mit statischen Magnetfeldsensoren einsetzen, die den Vorteil haben, auch im Stillstand und geschwindigkeitsunabhängige Mangnetfeldveränderungen durch ferromagnetische Störobjekte aufzunehmen. Andere metallische Objekte sind jedoch auch damit nur dynamisch zu verifizieren. Eine Kombination aus elektrodynamischen und magnetostatischen Sensoren ist ebenso vorteilhaft erfindungsgemäß zu nutzen, indem die Signale beim Rückfördern ausgewertet werden. Eine weitere vorteilhafte Nutzung der Vorrichtung erbringt eine Überprüfung der Schnellabschaltkupplung auf ihr Schaltverhalten, so dass die Redundanz im Förderweg von der Auslösung einer Schnellstillsetzung bis zum Stillstand der Förderung so groß ist, dass mit Sicherheit kein Fremdobjekt in das Häckselwerk gerät. Hierzu wird wiederholt mit einem Tastensignal eine Schnellauslösung im vollen Lauf des Förderers ausgelöst und durch Zählung der Drehgeberimpulse der Förderweg jeweils ermittelt. Da die Auslöseklinke der Stillsetzkupplung elektromagnetisch betätigt ist und einen Schaltweg zurücklegen muß, bis sie einen Sperrzahn an einem festzuhaltenden Zahnkranz greift, ist die Gefahr einer verzögerten Sperrung bei zu langsamer Klinkenbewegung oder bei fortgeschrittenem Verschleiß der Sperrzähne gegeben. Eine Schaltwegtoleranz ist außerdem durch den Abstand der Sperrzähne gegeben. Deshalb werden vorteilhaft mehrere Schnellabschaltungen ausgelöst und der jeweilige Förderweg über eine Zählung der Drehwinkelgeberimpulse ermittelt und der höchste Zählerabstand mit einem Toleranzzuschlag als Schwellwert für die späteren Überprüfungen der jeweils erreichten Zählerstände bei Schnellabschaltungen genutzt. Falls der Grenzwert überschritten wird, wird eine Anzeige vorgenommen, aufgrund derer eine Wartung und Überprüfung der Schnellschaltvorrichtung erfolgen soll.

Vorteilhafte Ausgestaltungen sind in den Fig. 1 bis 5 angegeben.
- Fig. 1: zeigt einen Ausschnitt aus einem Förder- und Häckselwerk seitlich teilweise geöffnet;
- Fig. 2: zeigt einen Querschnitt durch eine Sensorvorrichtung; (Stand der Technik)
- Fig. 3: zeigt einen Querschnitt durch eine andere Sensorvorrichtung; (Stand der Technik)
- Fig. 4: zeigt eine Aufsicht auf die Sensorvorrichtung zu Fig. 2;
- Fig. 5: zeigt ein Blockschaltbild der Steuervorrichtung

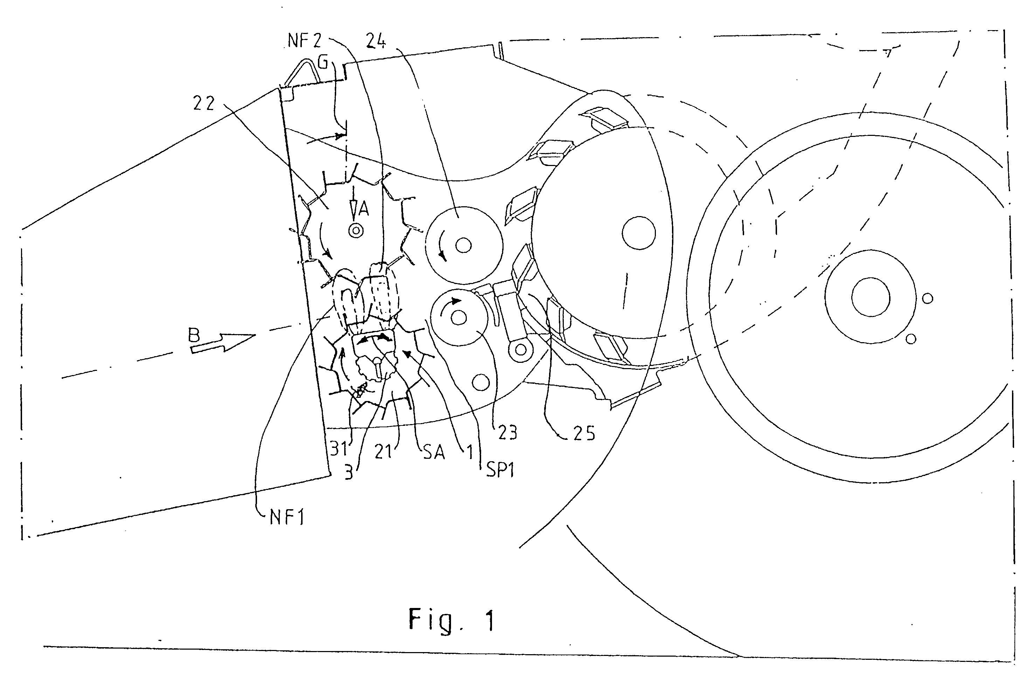

Fig. 1 zeigt einen Ausschnitt einer Erntevorrichtung, deren Schnittgutstrom über eine Förderbahn (B) und anschließende Förderwalzenpaare (21-24) der Häckselwalze (25) zugeführt wird. Die untere Förderwalze (21) ist angetrieben und mit Querrippen besetzt. Die obere Förderwalze (22) ist mit einem Andruck (A) vertikal zum Gutstrom und damit gegen die untere Förderwalze (21) angepreßt; sie ist auch mit Querrippen besetzt. Stromab ist ein weiteres glattes Walzenpaar (23, 24) angeordnet, und dahinter schließen sich das Schneidmesser und die Häckselwalze (25), die mit Messern besetzt ist, an. In der unteren Förderwalze (21) ist die Fremdkörpererkennungsvorrichtung (1) angeordnet, deren Magnetfeldkeulen (NF1, NF2) durch den Walzenmantel und den Förderspalt (SP1) hindurchtreten. Auf der Welle der Förderwalze (21) ist ein Winkelgeber (3) angeordnet, von dessen Winkelsensor (31) Signale an eine Steuervorrichtung geliefert werden, ebenso wie vor den Sensorwicklungen der magnetischen Fremdkörpererkennungsvorrichtung.
Durchläuft ein metallischer oder elektrisch leitender oder ferromagnetischer Fremdkörper die Magnetfeldkeulen (NF1, NF2), so treten in der Sensorwicklung elektrische Signale auf, die zum Schnellstoppen der Fördervorrichtung (2) genutzt werden. Während dieser Stoppzeit vom Stoppsignal bis zum Stillstand wird das Maß der Drehung der Förderwalzen (21-24) mittels der Winkelsensorsignale bestimmt und somit festgestellt, wie weit der Fremdkörper in Richtung auf der Häckselwalze (25) weitertransportiert wird. Demgemäß wird der Rücklauf anschließend gesteuert und dabei geprüft, ob der Fremdkörper das Magnetfeldkeule (NF1) des Sensors wieder verlassen hat.

Falls der Fremdkörper nicht vollständig zurücktransportiert wird, sondern in der Bremszeit oder beim anfänglichen Reversieren den Förderbereich durch den Förderspalt (SP1) zwischen den Förderwalzenpaaren (21,23) verläßt, wird dies an den fehlenden Sensorsignalen beim Rücklauf festgestellt und dem Bediener signalisiert. Der Rücklauf wird bei fehlender Meldung eines Objektdurchlaufs während des Rücklaufs der Förderwalzen (21-24) so beschränkt, dass auf keinen Fall das Objekt unentdeckt von der oberen Förderwalze (22) mitgenommen und oben herum nach vorn gelangen kann. Das Maß der Rückdrehung wird mittels des Winkelgebers (3) laufend ermittelt, und bei Erreichen eines vorgegebenen Grenzwinkels (G) wird der Rücktransport gestoppt. Eine noch genauere Rücklaufmessung der oberen Förderwalze (22) gibt ggf. ein daran angeordneter Winkelgeber, der nicht eingezeichnet ist.
In einer vorteilhaften Ausgestaltung ist die Fremdkörpererkennungsvorrichtung (1) mit einem Schwenkantrieb (SA) ausgestattet, der es ermöglicht, die Fremdkörper möglichst weit vorn beim Einlauf und nach einer Schwenkung möglichst weit auf der Häckslerseite zu erfassen und evtl. auch noch im rückwärtigen Förderspalt (SP1) zu erfassen. Somit läßt sich das Objekt im ganzen Förderbereich vor der Häckselwalze (25) aufspüren und nach einer Rückschwenkung oder mehrfacher Schwenkung bis in die Entnahmelage eingangs der Förderwalzen (21, 22) zurückverfolgen. Darüber hinaus ermöglicht die Verschwenkung es, die Magnetfeldkeulen (NF1, NF2) möglichst symmetrisch zum Durchlauf der störenden Rippen der Förderwalzen (21, 22) einzustellen, so dass sich die davon erzeugten periodischen Störsignale weitgehend kompensieren. Insbesondere ist dies dann der Fall, wenn die Rippen der Förderwalzen (21, 22), die sich im Bereich der Magnetfeldkeulen (NF1, NF2) befinden, jeweils so beabstandet ausgebildet sind, dass deren Abstände jeweils denen der Feldkanten entsprechen und somit die aufeinanderfolgenden ein- und die auslaufenden Rippen jeweils entgegengesetzt polarisierte Magnetfeldsignale erzeugen. Wie die Zeichnung verdeutlicht, hat die obere Förderwalze (22) einen größeren Durchmesser als die untere Förderwalze (21) in etwa dem Maß, wie die Feldkanten im Abstand der Walzenoberflächen divergieren.

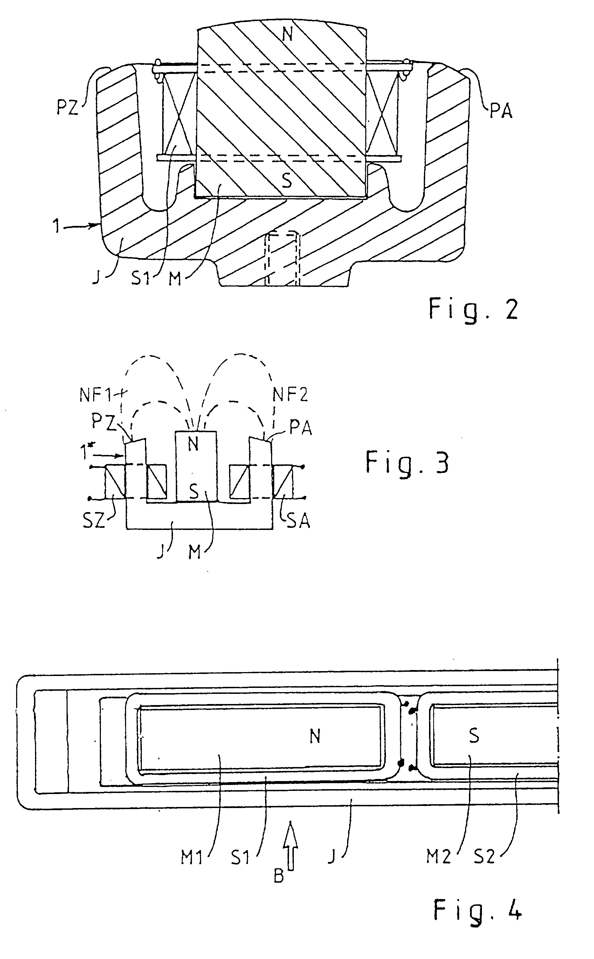

Fig. 2 zeigt einen Schnitt in Förderrichtung durch einen üblichen Magnetfeldsensor (4). Ein U-förmiges Weicheisenjoch (J), umschließt den einen Pol (N) des mittig angeordneten Magneten (M), so dass die Jochschenkel seitlich des Magneten (M) leicht divergieren. Zwischen dem freien Pol des Magneten (M) und den seitlich abfallenden Stirnflächen (PZ, PA) der Jochschenkel treten die Magnetfeldkeulen (NF1, NF2) leicht divergierend in den davor liegenden Raum aus.

Eine Sensorspule (S1) ist um den Magneten (M) gewickelt, so dass Feldänderungen des Magnetfeldes durch bewegte, elektrisch leitende Gegenstände eine Spannung darin induzieren, die als Sensorspannung abgegeben wird.

Fig. 3 zeigt eine weitere bekannte Variante der Anordnung der Magnetfeldsensoren (4), bei der auf den beiden Jochschenkein des Joches (J) je eine Sensorspule (SZ, SA) angeordnet ist. Auf diese Weise lassen sich zwei getrennte Sensorsignale gewinnen, die jeweils den Einlauf und den Auslauf eines leitendes Objektes in und aus den zugehörigen Magnetfeldkeulen (NF1, NF2) mit entsprechender Polarität signalisieren. Hierdurch läßt sich aus der Signalfolge beider Sensorsignale der Hinund der Rücklauf eines Objektes verfolgen und auch eine Relation der Objekterstreckung in der Förderrichtung zur Beabstandung und seitlichen in der Förderrichtung zur Beabstandung und seitlichen Erstreckung der Magnedfeldkeulen (NF1, NF2) ableiten. Hierzu wird das Auftreten der Eintritts- und Austrittssensorsignale in Bezug auf ihre Lage zur Folge der Winkelsensorsignale unter Berücksichtigung der Anzahlen der Winkelsensorsignale, die jeweils der mittleren Feldkeulenbreite und dem mittleren Feldkeulenabstand entsprechen, erfaßt. Selbstverständlich läßt sich auch ohne eine derartige Korrelation zu den Winkelsensorsignalen eine relative Größe und Lage des Objektes aus den Zeitlagen zueinander bestimmen, wobei jedoch eine größere Ungenauigkeit gegeben ist, wenn sich die Geschwindigkeit des Objektes durch das Abbremsen bzw. beschleunigen des Gutstromes während der Messung verändert.

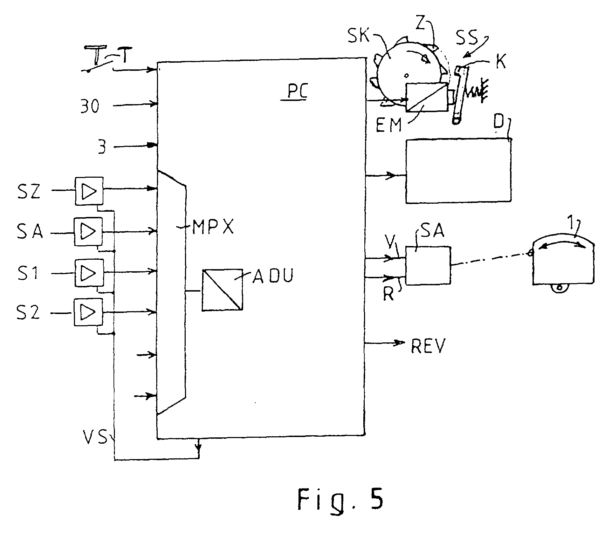

Fig. 4 zeigt einen Teilabschnitt eines Magnetfeldsensors (4) in Aufsicht. Quer zur Fördervorrichtung (2) sind mehrere Magnete (M1, M2) in dem gemeinsamen U-förmigen Joch (J) seitlich etwas beabstandet zueinander angeordnet. Jeder Magnet (M1, M2) hat eine eigene Sensorspule (S1, S2), und die Pole (N, S) sind wechselweise orientiert. Auf diese Weise sind die Feldkeulen von den Polen (N,S) zu den Jochen (J) quer zur Förderrichtung relativ schmal und langgestreckt ausgebildet und von den stirnseitigen Polflächen (N, S) dem größeren gemäß Abstand gemäß weiter austretend ausgebildet. Die Signale der einzelnen Spulen (S1, S2) werden vorteilhaft nicht nur zur gegenseitigem Kompensation von mit entgegengesetzter Polarität auftretenden Störsignalen der bewegten Maschinenteile, insbesondere Rippen der Förderwalzen (21, 22) genutzt, sondern einzeln auf Nutzsignale untersucht, so dass die Lage eines Störobjektes dem einzelnen Sensorabschnitt zugeordnet wird, was ein Suchen zum Herausnehmen wesentlich erleichtert. Die Anzahl der Magnete und Spulen ist nach praktischen Gesichtspunkten zu wählen. Fig. 5 zeigt eine Schaltung mit einem Steuerprozessor (PC), der die verschiedenen Sensorsignale der Signalgeber (S1, S2: SA, SZ) nach deren ersten Signalaufbereitung sowie Winkelgebersignale (30) von Winkelgebern (3) der Förderwalzen (21,22) aufnimmt und diese weiter verarbeitet. Die Signalvorverarbeitung betrifft zweckmäßig eine gesteuerte Verstärkung oder Dämpfung, die die Signalamplitudenverhältnisse weitgehend unabhängig von der Vorschubgeschwindigkeit macht. Das Steuersignal (VS) zur Verstärkungssteuerung wird aus den Winkelgebersignalen (30) abgeleitet.

Die aufbereiteten Signale der Signalgeber (S1,S2; SA, SZ) werden durch einen Multiplexer (MPX) in einen Analog-Digitalwandler (ADU) gegeben und dann digital weiterverarbeitet. Die Weiterverarbeitung wird jeweils durch Bildung einer Störkompensationsgröße aus den einzelnen Signalwerten und evtl. durch ein adaptiertes Filter entsprechend der zeitlichen Folge der Störsignale zur Herausstellung der einzelnen Nutzsignalkomponenten genutzt. Die in Bezug auf die Fig. 3 und 4 angegebenen Signalgeber (S1, S2; SA,SZ) sind abhängig davon, ob hintereinander und/oder nebeneinander liegende Sensorspulen vorhanden sind, in wesentlich größerer Zahl vorhanden als dargestellt.

Die Signale der verschiedenen Signalgeberspulen werden dann richtungsabhängig mit dazu passenden Schwellwerten verglichen, und bei einem Überschreiten einer der Schwellen wird jeweils das Eintreten bzw. Austreten eines Objektes in den oder aus dem zugehörigen Feldbereich registriert. Das jeweils zuerst auftretende Signal dient der Aktivierung der Schnellabschaltung (SS) und der Einleitung der weiteren Analysevorgänge, durch die mittels Zählungen der anschließend auftretenden Winkelgebersignale (30) bis zur weiteren Grenzwertüberschreitung oder anschließender Unterschreitungen die Größe und tatsächliche oder wahrscheinliche Lage des verursachenden Objektes festgehalten wird. Außerdem wird geprüft, wann die Winkelgebersignale (30) ausbleiben und somit der Schnellstopp ausgeführt ist, wozu auch die Reversierung (REV) angesteuert wird, während die Sensorsignale entsprechend ausgewertet werden. Das primäre Kriterium zur Beendigung des Reversierens (REV) ist der Nachweis, dass das Störobjekt vor den eingangsseitigen Sensorbereich gefördert worden ist, also die entsprechende Detektionsschwelle wieder unterschritten ist.
In dem Zustand wird angehalten und auf dem Anzeigefeld (D) die Lage und evtl. Größe des Objektes signalisiert.

Eine besondere Ausgestaltung der Vorrichtung umfaßt einen Schwenkantrieb (SA) der Fremdkörpererkennungsvorrichtung (1), die mit Vorwärts- und Rückwärtssteuersignalen (V, R) von dem Steuerprozessor (PC) angesteuert wird, wenn deren Erfassungsbereich zur Eingangsseite oder zur Häckslerseite der Förderstrecke verlagert werden soll. Auch wird für den normalen Fremdkörpererkennungsbetrieb eine solche Schwenkstellung angesteuert, bei der eine optimale Kompensation der Störsignale durch bewegte Maschinenteile erreicht ist.
Hierzu werden die Störsignalpegel während eines Durchschwenkens der Fremdkörpererkennungsvorrichtung (1) im Förderbetrieb korreliert zu deren Lage ausgewertet und dann die jeweilige Schwenklage eingestellt, bei der der geringste Störpegel festgestellt wurde. Während des weiteren Betriebes wird diese Stellung durch inkrementelle Variation periodisch überprüft und den jeweiligen Verhältnissen angepaßt. Insbesondere wenn der geförderte Gutstrom unterschiedlich stark ist, ändert sich der Abstand der Anpreßwalze zur angetriebenen Förderwalze, wodurch sich die Kompensationsverhältnisse leicht ändern, dem durch die laufende Nachprüfung der Kompensationseinstellung Rechnung getragen wird.

In Fig. 5 ist ein Eingang eines Signals einer Taste (T) gezeigt, mit dem jeweils eine Schaltung zu Prüfzwecken der Schnellabschaltung (SS) ausgelöst wird und die Zählung der Winkelgeberimpulse zur Bildung eines Grenzwertes oder zur späteren Prüfung der Schaltvorrichtung erfolgt, die von der Auslösung bis zum Stillstand auftreten. Die Schnellabschaltung (SS) besteht aus einem schnellerregten Elektromagneten (EM), dessen Joch eine Klinke (K) trägt, die mit Schaltzähnen (Z) eines Zahnkranzes einer Schnellkupplung (SK) zusammenwirkt.

## Patentansprüche

1. Fördervorrichtung, insbesondere an einer Erntemaschine, mit Förderwalzen (21-24) mit einer Metallfremdkörpererkennungsvorrichtung (1), die einem Häckselwerk (25) vorgeordnet ist und jeweils bei einem, in einem Fremdkörpererkennungsbereich erkannten Fremdkörper durch eine Steuervorrichtung (PC) eine Schnellstillsetzung der Förderwalzen (21-24) steuert, bevor dieser das Häckselwerk (25) erreicht,
**dadurch gekennzeichnet,**
**dass** nach der Schnellstillsetzung eine Rückwärtsförderung solange gesteuert erfolgt, bis der Fremdkörper den Fremdkörpererkennungsbereich wieder durchlaufen oder verlassen hat.

2. Fördervorrichtung nach Anspruch 1,
**dadurch gekennzeichnet,**
**dass** die Rückwärtsförderung höchstens solange betrieben wird, bis eine obere Förderwalze (22) den Fremdkörper höchstens bis zum höchsten Umfangspunkt derselben mitgeführt hat.

3. Fördervorrichtung nach Anspruch 1 oder 2,
**dadurch gekennzeichnet,**
**dass** die Erkennungssignale der Fremdkörpererkennungsvorrichtung in Verbindung mit Drehwinkelsignalen der Förderwalze (21, 22) zur Längenmessung des Fremdkörpers und zur Lagemessung im Förderbereich beim Vorwärts- und Rückwärtsfördern genutzt werden.

4. Fördervorrichtung nach Anspruch 3,
**dadurch gekennzeichnet,**
**dass** die Lage- und die Längenmessung durch jeweilige Zählung der Drehwinkelsignale während und nach dem Auftreten der Erkennungssignale bis zur Schnellstillsetzung und beim Rückwärtsfördern erfolgt.

5. Fördervorrichtung nach Anspruch 4,
**dadurch gekennzeichnet,**
**dass** die Lage- und Längenmeßwerte beim Vor- und Rücklauf im Rahmen von Toleranzvorgaben verglichen werden und Toleranzüberschreitungen sowie die Meßwerte an einem Bedienpult angezeigt werden, insbesondere eine Positionie rung nahe vor den Förderwalzen (21, 22) oder eine fehlende Erkennung beim Rücklauf angezeigt werden.

6. Fördervorrichtung nach einem der vorstehenden Ansprüche,
**dadurch gekennzeichnet,**
**dass** in der Fremdkörpererkennungsvorrichtung (1) alle Signale von in der Förderrichtung hintereinander angeordnete Sensoren (SZ, SA) einzeln bezüglich der Lage und der Länge des Fremdkörpers ausgewertet werden.

7. Fördervorrichtung nach einem der vorstehenden Ansprüche,
**dadurch gekennzeichnet,**
**dass** in der Fremdkörpererkennungsvorrichtung (1) die Signale von quer zur Förderrichtung nebeneinander angeordneten Sensoren (S1, S2) einzeln ausgewertet werden und am Bedienpult angezeigt werden.

8. Fördervorrichtung nach einem der vorstehenden Ansprüche,
**dadurch gekennzeichnet,**
**dass** die Signale mehrerer Sensoren (SZ, SA; S1, S2) summiert werden und summiert anteilig von den einzelnen Signalen störkompensatorisch abgezogen werden.

9. Fördervorrichtung nach einem der vorstehenden Ansprüche,
**dadurch gekennzeichnet,**
**dass** die Fremdkörpererkennungsvorrichtung (1) innerhalb der Förderwalze (21) verschwenkbar angeordnet ist, so dass je nach der Schwenkeinstellung deren Erkennungsbereich mehr oder weniger nah an das Häckselwerk (25) reicht und aus den jeweiligen Schwenkstellungen ein Auftreten und Verschwinden des Erkennungssignals die Lage und/oder Größe des Fremdkörpers bestimmt wird.

10. Fördervorrichtung nach Anspruch 9,
**dadurch gekennzeichnet,**
**dass** die Fremdkörpererkennungsvorrichtung (1) gewöhnlich in eine solche Grundeinstellung verschwenkt ist, in der Störsignale am stärksten unterdrückt sind.

11. Fördervorrichtung, insbesondere an einer Erntemaschine, mit Förderwalzen (21-24), deren Drehwinkel laufend mit einem Drehwinkelgeber (31) signalisiert wird, mit einer Metallfremdkörpererkennungsvorrichtung (1), die einem Häckselwerk (25) vorgeordnet ist und jeweils bei einem, in einem Fremdkörpererkennungsbereich erkannten Fremdkörper über eine Steuervorrichtung (PC) eine Schnellstillsetzung der Förderwalzen (21-24) steuert, bevor dieser das Häckselwerk (25) erreicht,
**dadurch gekennzeichnet,**
**dass** die Drehwinkelsignale des Drehwinkelgebers (31) jeweils ab einer Auslösung einer Schnellstillsetzung in einem Zähler gezählt werden und beim Still stand der Förderwalzen (21-24) der jeweilige Zählerstand mit einem vergebenen Grenzwert verglichen wird, bei dessen Überschreitung eine Anzeige der Über schreitung erfolgt.

12. Fördervorrichtung nach Anspruch 11,
**dadurch gekennzeichnet,**
**dass** über einen Kontakt der Taste (T) der Steuervorrichtung (PC) jeweils betätigt ein Prüfsignal zwecks einer Schnellstillsetzung der Förderwalzen (21-24) zugeführt wird.

13. Fördervorrichtung nach Anspruch 11 oder 12,
**dadurch gekennzeichnet,**
**dass** jeweils beim Stillstand der Förderwalzen (21-24) nach einer Schnellstillsetzung der jeweilige Zählerstand gespeichert wird und aufeinanderfolgend von mehreren Zählerständen der jeweils höchste um eine Toleranzmarge erhöht als der Grenzwert gespeichert wird.

## Claims

1. A conveyor apparatus, in particular on a harvester, comprising conveyor rollers (21-24) with a metal foreign body detection device (1) which is arranged upstream of a chaff cutting mechanism (25) and which at a respective foreign body which is detected in a foreign body detection region controls rapid shut-down of the conveyor rollers (21-24) by a control device (PC) before the foreign body reaches the chaff cutting mechanism (25), **characterised in that** after the rapid shut-down rearward conveying is controlledly effected until the foreign body has again passed through or left the foreign body detection region.

2. A conveyor apparatus according to claim 1 **characterised in that** rearward conveying is operated at most until an upper conveyor roller (22) has entrained the foreign body at most as far as the highest peripheral point of the conveyor roller.

3. A conveyor apparatus according to claim 1 or claim 2 **characterised in that** the detection signals of the foreign body detection device are used in conjunction with rotational angle signals of the conveyor roller (21, 22) for length measurement of the foreign body and for positional measurement in the conveyor region in forward and rearward conveying.

4. A conveyor apparatus according to claim 3 **characterised in that** positional and length measurement is effected by respective counting of the rotational angle signals during and after the occurrence of the detection signals up to the rapid shut-down and in rearward conveying.

5. A conveyor apparatus according to claim 4 **characterised in that** the positional and length measurement values are compared in the forward and rearward mode within the limits of tolerance parameters and tolerance surpassments and the measurement values are displayed at a control desk, in particular positioning closely upstream of the conveyor rollers (21, 22) or a lack of detection in the rearward mode are displayed.

6. A conveyor apparatus according to one of the preceding claims **characterised in that** in the foreign body detection device (1) all signals from sensors (SZ, SA) which are arranged in succession in the conveyor direction are evaluated singly in respect of the position and the length of the foreign body.

7. A conveyor apparatus according to one of the preceding claims **characterised in that** in the foreign body detection device (1) the signals from sensors (S1, S2) arranged in mutually juxtaposed relationship transversely to the conveyor direction are evaluated singly and displayed at the control desk.

8. A conveyor apparatus according to one of the preceding claims **characterised in that** the signals of a plurality of sensors (SZ, SA; S1, S2) are summed and subtracted in summed form proportionally from the individual signals in disturbance-compensatory fashion.

9. A conveyor apparatus according to one of the preceding claims **characterised in that** the foreign body detection device (1) is arranged pivotably within the conveyor roller (21) so that depending on the respective pivotal setting the detection region thereof extends more or less close to the chaff cutting mechanism (25) and the position and/or size of the foreign body is determined from the respective pivotal positions by virtue of the occurrence and disappearance of the detection signal.

10. A conveyor apparatus according to claim 9 **characterised in that** the foreign body detection device (1) is usually pivoted into such a basic position in which disturbance signals are most greatly suppressed.

11. A conveyor apparatus, in particular on a harvester, comprising conveyor rollers (21-24) whose angle of rotation is continuously signalled with a rotational angle detector (31), with a metal foreign body detection device (1) which is arranged upstream of a chaff cutting mechanism (25) and which at a respective foreign body which is detected in a foreign body detection region controls rapid shut-down of the conveyor rollers (21-24) by a control device (PC) before the foreign body reaches the chaff cutting mechanism (25), **characterised in that** the rotational angle signals from the rotational angle detector (31) are respectively counted in a counter from initiation of a rapid shut-down and when the conveyor rollers (21-24) are stopped the respective counter condition is compared to a predetermined limit value, the fact of the limit value being exceeded being displayed when the limit value is exceeded.

12. A conveyor apparatus according to claim 11 **characterised in that** respectively actuated by way of a contact of the key (T) of the control device (PC) a test signal is supplied for the purposes of rapid shut-down of the conveyor rollers (21-24).

13. A conveyor apparatus according to claim 11 or claim 12 **characterised in that** in each case when the conveyor rollers (21-24) are stopped after a rapid shut-down the respective counter condition is stored and out of a plurality of counter conditions in succession the respectively highest one is stored, increased by a tolerance margin, as the limit value.

## Revendications

1. Dispositif transporteur, en particulier sur une machine de récolte, comprenant des rouleaux de transport (21-24) et un dispositif (1) de détection de corps étrangers métalliques qui est monté en amont d'un mécanisme hacheur (25) et qui commande, en présence d'un corps étranger détecté dans une zone de détection de corps étrangers, en passant par un dispositif de commande (PC), une mise à l'arrêt rapide des rouleaux de transport (21-24) avant que le corps étranger n'atteigne le mécanisme hacheur (25)
**caractérisé par le fait**
**qu'**après la mise à l'arrêt rapide, un transport en arrière (dans le sens de recul) est effectué de façon commandée jusqu'à ce que le corps étranger ait de nouveau traversé ou ait quitté la zone de détection de corps étrangers.

2. Dispositif transporteur suivant la revendication 1,
**caractérisé par le fait**
**que** le transport en arrière est effectué au plus jusqu'à ce qu'un rouleau de transport (22) supérieur ait entraîné le corps étranger au plus jusqu'au point le plus haut de la périphérie de ce rouleau.

3. Dispositif transporteur suivant la revendication 1 ou 2,
**caractérisé par le fait**
**que** les signaux de détection du dispositif de détection de corps étrangers sont utilisés, en combinaison avec des signaux de position angulaire du rouleau de transport (21, 22), pour la mesure de longueur du corps étranger et pour la mesure de position dans la zone de transport lors du transport en avant et en arrière.

4. Dispositif transporteur suivant la revendication 3,
**caractérisé par le fait**
**que** la mesure de position et de longueur s'effectue par comptage des signaux de position angulaire pendant et après l'apparition des signaux de détection jusqu'à la mise à l'arrêt rapide et lors du transport en arrière.

5. Dispositif transporteur suivant la revendication 4,
**caractérisé par le fait**
**que** les signaux de mesure de position et de longueur, lors du transport en avant et en arrière, sont comparés dans le cadre de limites de tolérances et que des dépassements de tolérances ainsi que les valeurs de mesure, en particulier un positionnement à proximité devant les rouleaux de transport (21, 22) ou un défaut de détection pendant le transport en arrière, sont affichés sur un pupitre de commande.

6. Dispositif transporteur suivant l'une des revendications précédentes,
**caractérisé par le fait**
**que** dans le dispositif (1) de détection de corps étrangers, tous les signaux de capteurs (SZ, SA) disposés les uns derrière les autres dans la direction de transport sont exploités séparément en ce qui concerne la position et la longueur du corps étranger.

7. Dispositif transporteur suivant l'une des revendications précédentes,
**caractérisé par le fait**
**que** dans le dispositif (1) de détection de corps étrangers, les signaux de capteurs (S1, S2) disposés les uns à côté des autres transversalement à la direction de transport sont exploités séparément et affichés sur le pupitre de commande.

8. Dispositif transporteur suivant l'une des revendications précédentes,
**caractérisé par le fait**
**que** les signaux de plusieurs capteurs (SZ, SA ; S1, S2) sont additionnés et sont retranchés de façon additionnée en proportion des différents signaux avec compensation des parasites.

9. Dispositif transporteur suivant l'une des revendications précédentes,
**caractérisé par le fait**
**que** le dispositif (1) de détection de corps étrangers est monté pivotant à l'intérieur du rouleau de transport (21) de manière que selon la position de pivotement, sa zone de détection s'étende plus ou moins près du mécanisme hacheur (25) et que la position et/ou la taille du corps étranger est déterminée par l'apparition et la disparition du signal de détection dans les positions de pivotement respectives.

10. Dispositif transporteur suivant la revendication 9,
**caractérisé par le fait**
**que** le dispositif (1) de détection de corps étrangers est normalement amené par pivotement dans une position de base dans laquelle les signaux parasites sont atténués au maximum.

11. Dispositif transporteur, en particulier sur une machine de récolte, comprenant des rouleaux de transport (21-24) dont la position angulaire est signalée en permanence à l'aide d'un transmetteur angulaire (31) et un dispositif (1) de détection de corps étrangers métalliques qui est monté en amont d'un mécanisme hacheur (25) et qui commande, en présence d'un corps étranger détecté dans une zone de détection de corps étrangers, en passant par un dispositif de commande (PC), une mise à l'arrêt rapide des rouleaux de transport (21-24) avant que le corps étranger n'atteigne le mécanisme hacheur (25)
**caractérisé par le fait**
**que** les signaux de position angulaire du transmetteur de position angulaire (31) sont comptés dans un compteur depuis chaque déclenchement d'une mise à l'arrêt rapide et que lors de l'arrêt des rouleaux de transport (21-24), l'état du compteur est comparé avec une valeur limite préfixée, un affichage ayant lieu lors du dépassement de cette valeur limite.

12. Dispositif transporteur suivant la revendication 11,
**caractérisé par le fait**
**qu'**un signal de contrôle confirmé par un contact d'une touche (T) est amené au dispositif de commande (PC) en vue d'une mise l'arrêt rapide des rouleaux de transport (21-24).

13. Dispositif transporteur suivant la revendication 11 ou 12,
**caractérisé par le fait**
**que** lors de chaque arrêt des rouleaux de transport (21-24), après une mise à l'arrêt rapide, l'état du compteur est mémorisé et après plusieurs états de compteurs successifs, l'état le plus élevé augmenté d'une marge de tolérances est mémorisé comme valeur limite.
